# EUROPÄISCHE PATENTSCHRIFT

(11) **EP 3 672 763 B1**
(45) Veröffentlichungstag und Bekanntmachung des Hinweises auf die Patenterteilung: **26.05.2021**
(21) Anmeldenummer: 18762029.9
(22) Anmeldetag: 16.08.2018
(51) Int. Cl.: B25J 15/00, B23K 37/047, B25B 11/02, B62D 65/02

(54) **POSITIONIER- UND SPANNSYSTEM UND VERFAHREN**
POSITIONING AND CLAMPING SYSTEM AND METHOD
SYSTÈME ET PROCÉDÉ DE POSITIONNEMENT ET DE SERRAGE

(30) Priorität: 25.08.2017 DE 102017119489
(43) Veröffentlichungstag der Anmeldung: 01.07.2020
(73) Patentinhaber: KUKA Systems GmbH, 86165 Augsburg (DE)
(72) Erfinder: BROCKHOFF, Per-Olaf, 86316 Friedberg/Stätzling (DE); KARMANN, Christian, 86554 Pöttmes (DE); KRAUS, Johann, 86690 Mertingen (DE)
(74) Vertreter: Tillmann, Axel
(86) Internationale Anmeldenummer: PCT/EP2018/072182
(87) Internationale Veröffentlichungsnummer: WO 2019/038167

(56) Entgegenhaltungen:
- EP-A1- 2 524 861
- DE-T2- 60 121 941
- DE-U1-202007 009 015
- KR-A- 20110 028 128
- US-A1- 2009 183 355

## Beschreibung

Die Erfindung betrifft ein Positionier- und Spannsystem und ein Verfahren mit den Merkmalen im Oberbegriff des Verfahrens- und Vorrichtungshauptanspruchs.

Aus der Praxis sind robotergeführte Geogreifwerkzeuge zum lagedefinierten Spannen von Werkstücken bekannt, wobei ein Handlingroboter das Geogreifwerkzeug schwebend hält und Fügerobotern zur Bearbeitung präsentiert. In einer anderen praxisbekannte Ausführung führt ein Handlingroboter ein einfaches Greifwerkzeug, mit dem ein Werkstück gehalten und auf einer stationären Spanneinrichtung für die Bearbeitung, insbesondere zu Fügen, abgelegt wird.

Die DE 601 21 941 T2 zeigt ein Herstellungsverfahren und eine Herstellungsanlage zum Montieren eines Fahrzeugaufbaus in einem Montagewerk mit mindestens einem Industrieroboter.

Die DE 20 2007 009015 U1 zeigt eine Fügestation mit einer Spanneinrichtung für Karosseriebauteile.

Aus der EP 2 524 861 A1 ist eine Vorrichtung und ein Verfahren zur Handhabung eines Fahrzeugmontagewerkzeugträgers bei einer Fahrzeugfertigungslinie, Fahrzeugmontagewerkzeugträger und Montagestation bekannt.Des Weiteren zeigt die US 2009/183355 A1 ein System und ein Verfahren zur Montage von Fahrzeugkarosseriestrukturen.

Es ist Aufgabe der vorliegenden Erfindung, eine verbesserte Positionier- und Spanntechnik sowie Fertigungstechnik aufzuzeigen.

Die Erfindung löst diese Aufgabe mit den Merkmalen in den selbstständigen Verfahrens- und Vorrichtungsansprüchen.

Die beanspruchte Positionier-, Spann- und Fertigungstechnik, insbesondere das Positionier- und Spannsystem, die Fertigungseinrichtung und das Fertigungsverfahren, haben verschiedene Vorteile.

Die beanspruchte Positionier- und Spanntechnik weist ein mobiles und robotergeführtes Greifwerkzeug, sowie eine verstellbare Stützeinrichtung für das Greifwerkzeug auf. Das Greifwerkzeug kann das einteilige oder mehrteilige Werkstück greifen und halten. Das Greifwerkzeug kann in einer einfachen Form nur zum Halten des Werkstücks dienen, wobei die Werkstücklage relativ ungenau sein kann. Es kann hierfür z.B. Saug- oder Klemmgreifer aufweisen.

Das Greifwerkzeug kann auch als höherqualifiziertes Geogreifwerkzeug ausgebildet sein, welches außerdem zum lagedefinierten Spannen des Werkstücks dient. Das gespannte Werkstück kann dadurch mit hoher geometrischer Präzision eine vorgegebene Lage am Geogreifwerkzeug einnehmen. Die Lage kann die Position und/oder Ausrichtung des Werkstücks betreffen.

Die verstellbare Stützeinrichtung kann das Greifwerkzeug, insbesondere Geogreifwerkzeug, mit dem gespannten Werkstück für dessen Bearbeitung an der Arbeitsstelle stationär abstützen, stabilisieren und exakt positionieren. Die Stützeinrichtung kann außerdem das Greifwerkzeug, insbesondere Geogreifwerkzeug, in der Abstützstellung fixieren. Mit dem Greifwerkzeug, insbesondere Geogreifwerkzeug, kann auch das in definierter Lage gespannte Werkstück exakt positioniert und abgestützt sowie ggf. fixiert werden.

Für die Stabilisierungsfunktion sind eine Abstützung des Greifwerkzeugs an mehreren voneinander distanzierten, vorzugsweise umfangseitigen, Angriffsstellen und ein formschlüssiger Stützeingriff von Vorteil. Vorzugsweise sind der, vier oder mehr Angriffsstellen vorhanden. Die Stützeinrichtung kann hierfür mehrere Aufnahmen in geeigneter Ausbildung, bevorzugt als steuerbare Spanngreifer, aufweisen.

Das Greifwerkzeug, insbesondere Geogreifwerkzeug, kann dadurch in der Betriebsstellung mit hoher Lagegenauigkeit und mechanischer Stabilität an der Arbeitsstelle angeordnet und exakt positioniert werden. Die Lasten und Spannkräfte können stationär, vorzugsweise bodenseitig, sowie mit hoher Steifigkeit abgestützt werden. Dank der externen Stabilisierung durch die Stützeinrichtung kann das Greifwerkzeug, insbesondere Geogreifwerkzeug, verformungslabil, schlank und leichtgewichtig ausgeführt sein. Durch die Gewichtseinsparung kann der Handlingroboter eine niedrige Traglast haben und/oder das Werkstückgewicht kann erhöht werden.

Andererseits kann ein Lastaufnahmemittel von Spannfunktionen und von einer Werkstückbearbeitung entlastet werden. Es braucht das Werkstück nur zu Transportzwecken sowie mit ggf. verringerter Lagepräzision zu halten und dessen Aufnehmen und ggf. Assemblieren durch das Greifwerkzeug, insbesondere Geogreiferwerkzeug, zu ermöglichen. Das Lastaufnahmemittel kann daher konstruktiv vereinfacht und leichtgewichtig ausgebildet sein. Die Gewichtseinsparung kommt der Fördertechnik zugute, insbesondere bei Einsatz von leichten und batteriebetriebenen Fördermitteln.

Das Werkstück kann einteilig oder mehrteilig sein. Auf dem mobilen Lastaufnahmemittel kann ein mehrteiliges Werkstück in der bereits vorhandenen Lage positioniert und gehalten werden. Es kann alternativ in einem Assembliervorgang mit Veränderung der Lage von vorhandenen Werkstückteilen und/oder der Zuführung weiterer Werkstückteile auf dem Lastaufnahmemittel positioniert und gespannt werden.

Die verstellbare Stützeinrichtung ist an der Arbeitsstelle stationär angeordnet. Sie nimmt erfindungsgemäß eine ausgefahrene Betriebsstellung an der Arbeitsstelle für ihre Abstützfunktion und eine zurückgezogene Ruhestellung ein. Die verstellbare Stützeinrichtung hat eine kleine Störkontur und behindert nicht den Zugang zum Werkstück, wenn die Stützeinrichtung noch nicht in Funktion tritt. Durch die Verstellbarkeit kann sich die Stützeinrichtung von der Arbeitsstelle und der Betriebsstellung in die Ruhestellung zurückziehen und dadurch die Zugänglichkeit zum Werkstück verbessern. Dies ist einerseits für die Aufnahme des Werkstücks vom Lastaufnahmemittel mittels des robotergeführten Greifwerkzeugs, insbesondere Geogreifwerkzeugs, vorteilhaft. Andererseits können bedarfsweise ein oder mehrere weitere Werkstücke der Arbeitsstelle zugeführt werden, z.B. mit einem weiteren Lastaufnahmemittel. Außerdem können von der Bearbeitungseinrichtung vorbereitende Prozesse am Werkstück und an der Arbeitsstelle durchgeführt werden.

Die Verstellbarkeit der Stützeinrichtung erleichtert andererseits den Einsatz verschiedener Geogreifwerkzeuge, die an unterschiedliche Werkstücke adaptiert sind. Die verschiedenen Geogreifwerkzeuge können unterschiedliche Formen und/oder Größen aufweisen. Das Positionier- und Spannsystem kann zwei oder mehr verschiedene Geogreifwerkzeuge umfassen. Die verstellbare Stützeinrichtung kann an die verschiedenen Geogreifwerkzeuge angepasst werden und kann diese dank der Verstellbarkeit jeweils stationär abstützen und positionieren.

Die Verstellbarkeit der Stützeinrichtung kann in mehreren Stellachsen bzw. Richtungen erfolgen. Eine seitliche, insbesondere horizontale, Verstellung ermöglicht die Bewegung zwischen der Betriebs- und Ruhestellung. Eine zusätzliche Höhenverstellung ermöglicht eine Veränderung der Höhenlage und bedarfsweise auch eine Schrägstellung des abgestützten Geogreifwerkzeugs.

Das Geogreifwerkzeug kann von einem Handlingroboter, insbesondere einem mehrachsigen Industrieroboter, geführt und an die verstellbare Stützeinrichtung zugestellt und ggf. übergeben werden. Das Geogreifwerkzeug kann hierfür einen geeigneten Anschluss zur ggf. lösbaren und Medien übertragenden Verbindung mit dem Handlingroboter aufweisen.

Das Geogreifwerkzeug weist ein Tragmittel mit Spannmitteln für das Werkstück und mit dem besagten Anschluss für einen Handlingroboter sowie mit Positioniermitteln für einen formschlüssigen und lagedefinierten Stützeingriff mit den Aufnahmen auf. Die bevorzugt drei, vier oder mehr Angriffsstellen für die Stützeinrichtung können sich an der Werkzeugperipherie, insbesondere an seitlich abstehenden Ansätzen, befinden.

Für die Gestaltung des Geogreifwerkzeugs gibt es unterschiedliche Möglichkeiten. Besonders günstig ist eine Ausbildung als Tragrahmen mit mehreren verbundenen Tragholmen. Diese können eine vorgegebene, insbesondere prismatische, Außenkontur aufweisen, welche eine formschlüssige Aufnahme, Positionierung und Abstützung durch die Stützeinrichtung erleichtert. Alternativ können bevorzugt rohrartige Holme mit einer anderen Außenkontur eingesetzt werden. Eine Lochung der Tragholme erleichtert das Anbringen der Positioniermittel, z.B. in Form von Pins, an den Tragholmen und den hier bevorzugt ausgebildeten Angriffsstellen. Das Tragmittel kann alternativ eine andere Konfiguration, z.B. in einer Plattenform, aufweisen.

Das Geogreifwerkzeug wird vorzugsweise von oben auf die Stützeinrichtung aufgesetzt und dabei positioniert und abgestützt sowie ggf. fixiert. Die Stützeinrichtung kann für diese Funktionen in beliebig geeigneter Weise ausgebildet sein.

In der Abstützstellung ist das Greifwerkzeug, insbesondere Geogreifwerkzeug, bevorzugt derart positioniert, dass das Werkstück an seiner Unterseite hängend angeordnet ist und in dieser Lage bearbeitet wird. Alternativ kann das Greifwerkzeug, insbesondere Geogreifwerkzeug, gewendet werden, wobei das Werkstück an der Oberseite angeordnet ist. Die hängende Werkstückanordnung hat Zeit- und Platzvorteile. Das Werkstück auf dem Lastaufnahmemittel kann mit dem Greifwerkzeug, insbesondere Geogreifwerkzeug, von oben gegriffen, ggf. gespannt, und in dieser Lage soweit angehoben werden, bis die Stützeinrichtung ihre ausgefahrene Betriebsstellung einnehmen kann und dann zum Abstützen wieder abgesenkt werden. Dieser Bewegungsablauf ist schnell, hat nur kurze Wege und verlangt wenig Freiraum. Die Prozesszeit innerhalb eines Arbeitstakts kann besser ausgenutzt werden.

In einer vorteilhaften Ausgestaltung weist die Stützeinrichtung mehrere mit gegenseitigem Abstand und flächig verteilt angeordnete Stützmittel mit jeweils einer ein- oder mehrachsig verstellbaren Aufnahme für das Geogreifwerkzeug auf. Die Stützmittel können in beliebig geeigneter Zahl und Anordnung vorhanden sein. Günstig ist eine Anordnung von vier im Viereck verteilten und mit seitlichem Abstand zur Arbeitsstelle bzw. zum dortigen Lastaufnahmemittel angeordneten Stützmitteln. Eine Anordnung und ggf. Schrägausrichtung der Stützmittel an den Eckbereichen der Arbeitsstelle bzw. des Lastaufnahmemittels ist vorteilhaft.

Die Stützmittel können z.B. galgenartig ausgebildet sein. Sie können einen aufrechten Ständer mit einem liegenden Ausleger und eine ein- oder mehrachsigen Stelleinrichtung für die Aufnahme aufweisen. Die Stelleinrichtung kann den als Tragarm fungierenden Ausleger mit der bevorzugt endseitigen Aufnahme seitlich und ggf. in der Höhe relativ zum Ständer bewegen. Die Stelleinrichtung kann eine oder mehrere translatorische und/oder rotatorische Stellachsen aufweisen. Günstig ist z.B. eine lineare translatorische Achse.

Das Positionier- und Spannsystem kann eine Steuerung aufweisen. Es kann auch automatisch verstellbar sein. Bei einem Werkzeugwechsel kann die Steuerung von einer übergeordneten Stations- oder Anlagensteuerung eine entsprechende Steuerinformation oder einen Steuerbefehl erhalten. Die Stützeinrichtung kann zur Abstützung und Positionierung des zugehörigen Geogreifwerkzeugs entsprechend angesteuert werden und die eine oder mehreren Aufnahmen für das Geogreifwerkzeug entsprechend positionieren.

Das Positionier- und Spannsystem sowie das zugehörige Positionier- und Spannverfahren können eine technisch und wirtschaftlich eigenständige Einheit bilden. Sie können an einer bestehenden Fertigungseinrichtung durch Nachrüstung oder Umrüstung angeordnet werden. Alternativ können sie zur Erstausrüstung einer Fertigungseinrichtung gehören.

Der Handlingroboter zum Führen und Zustellen des Geogreifwerkzeugs kann Bestandteil des Positionier- und Spannsystems sein. Alternativ kann ein bereits in einer Fertigungseinrichtung vorhandener Handlingroboter zu diesem Zweck eingesetzt und konfiguriert werden. Die Steuerung des Positionier- und Spannsystem kann in die Robotersteuerung des Handlingroboters implementiert sein.

Die Fertigungseinrichtung kann die besagte Arbeitsstelle aufweisen. Sie kann ferner eine Positioniereinrichtung aufweisen, mit der das Lastaufnahmemittel an der Arbeitsstelle in einer definierten Lage positioniert wird. Hierüber kann das Lastaufnahmemittel direkt positioniert werden. Alternativ oder zusätzlich kann das Lastaufnahmemittel mittelbar über ein Fördermittel positioniert werden, welches das Lastaufnahmemittel mitsamt des Werkstücks transportiert.

Vorteilhaft ist auch eine lösbare Verbindung zwischen dem Lastaufnahmemittel und dem Fördermittel. Das bevorzugt rahmenartige Lastaufnahmemittel kann für den vorgesehenen Fertigungsprozess vom Fördermittel durch die Positioniereinrichtung gelöst und eigenständig positioniert werden. Das freigegebene Fördermittel kann sich dann eigenständig weiterbewegen.

Am Werkstück können beliebige Bearbeitungsprozesse durchgeführt werden. Vorteilhafterweise sind dies Fügeprozesse und ggf. auch Assemblierprozesse.

Die Fertigungseinrichtung und das Fertigungsverfahren können Bestandteil einer Fertigungsanlage und eines anlagenübergreifenden Fertigungsprozesses sein. Vorteilhafterweise ist das Fördermittel als fahrerloses und automatisch steuerbares sowie vorzugsweise flurgebundenes Förderfahrzeug, z.B. AGV, ausgebildet. Es kann auf einem anlagenübergreifenden Netz von Förderwegen bewegt werden. Es kann auf einem solchen Förderweg in eine z.B. als Fertigungszelle ausgebildete Fertigungseinrichtung zu einer innen liegenden Arbeitsstelle fahren.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: Figur l:einen Schemaplan einer Fertigungseinrichtung mit einem Positionier- und Spannsystem,
- Figur 2:: eine perspektivische Ansicht der Fertigungseinrichtung mit einem Werkstück auf einem Lastaufnahmemittel und einer Bearbeitungseinrichtung,

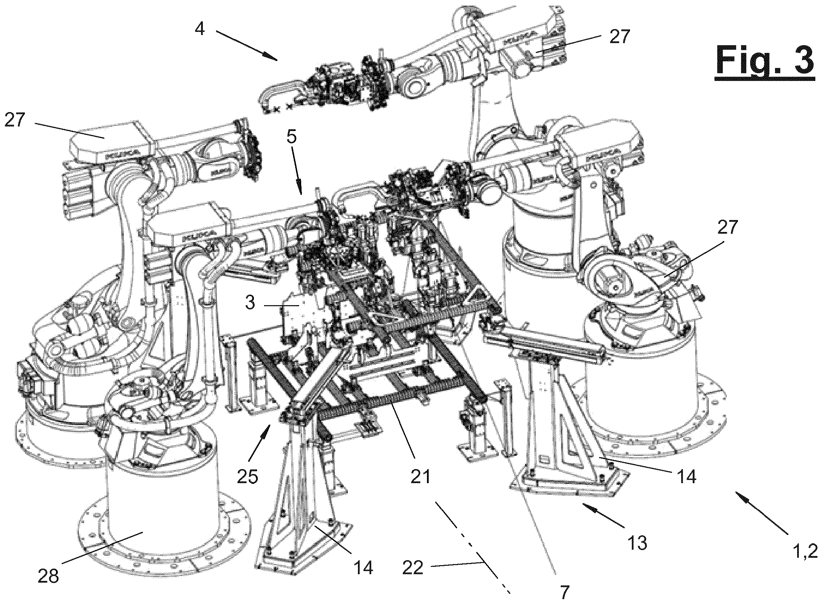

- Figur 3:: die Anordnung von Figur 2 zusammen mit dem Positionier- und Spannsystem,

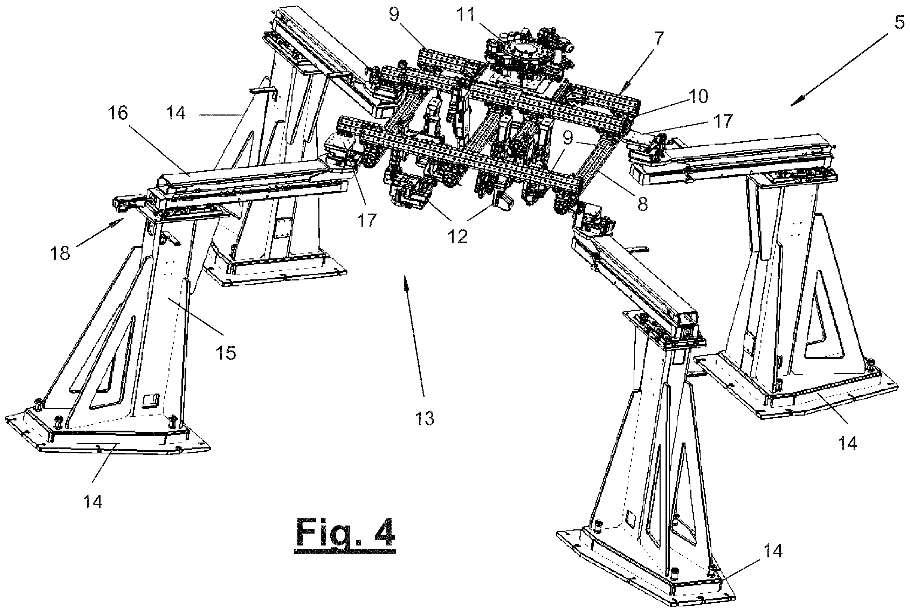

- Figur 4:: eine perspektivische Ansicht des Positionier- und Spannsystems,

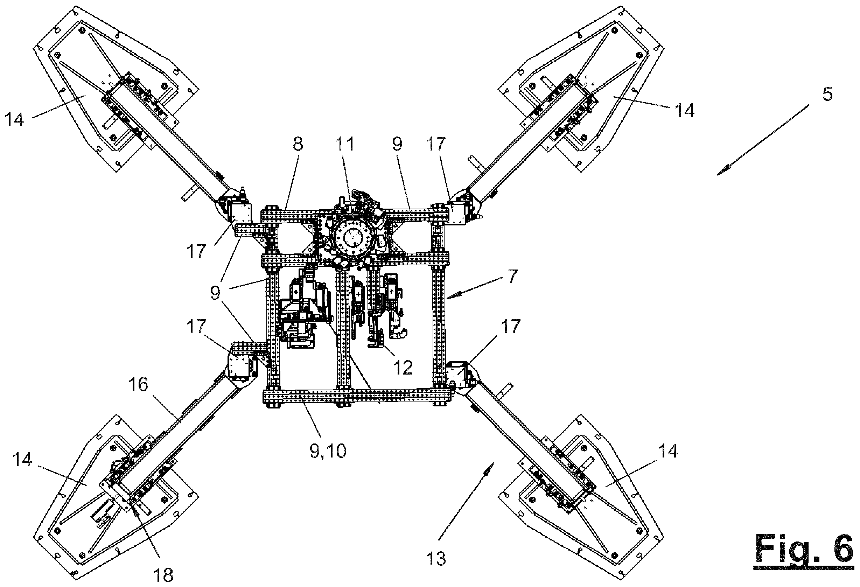

- Figur 5 und 6:: eine Seitenansicht und eine Draufsicht des Positionier- und Spannsystems gemäß Figur 4 und

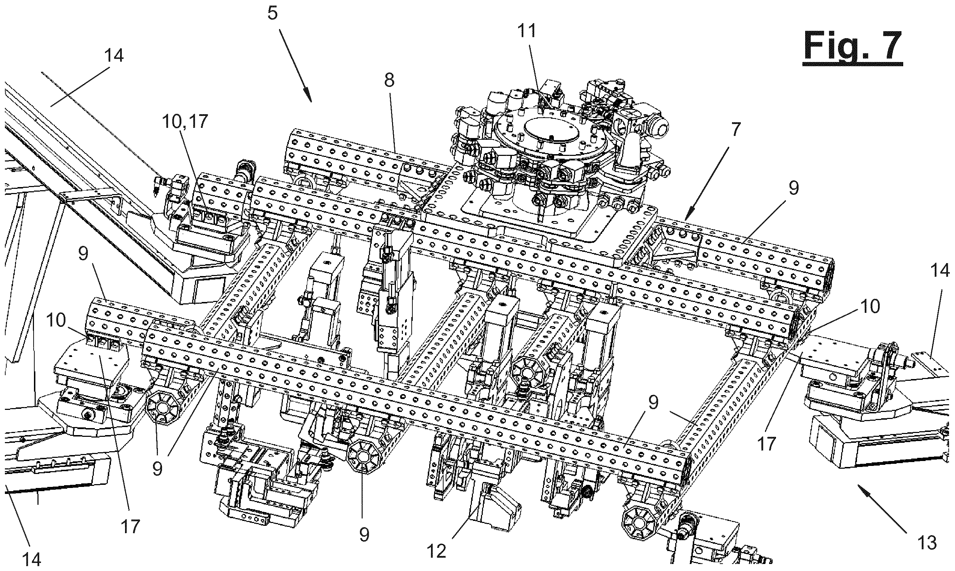

- Figur 7:: eine abgebrochene und vergrößerte perspektivische Ansicht eines Geogreifwerkzeugs des Positionier- und Spannsystems.

Die Erfindung betrifft ein Positionier- und Spannsystem (5) sowie ein zugehöriges Verfahren für ein Werkstück (3). Die Erfindung betrifft ferner eine Fertigungseinrichtung (2) mit dem Positionier- und Spannsystem (5) nebst einem Fertigungsverfahren. Die Erfindung umfasst außerdem eine Fertigungsanlage (1) und einen anlagenübergreifenden Fertigungsprozess.

Das Werkstück (3) kann einteilig oder mehrteilig sein. Das Werkstück (3) kann eine beliebige Art und Größe haben und kann aus einem beliebigen Werkstoff, z.B. Metall und/oder Kunststoff bestehen. Vorzugsweise handelt es sich um ein Karosseriebauteil einer Fahrzeugkarosserie, welches aus Metall und/oder Kunststoff besteht. In einer bevorzugten Ausgestaltung ist das Werkstück (3) als Teilesatz aus mehreren Werkstückteilen, insbesondere Karosseriebauteilen ausgebildet.

Das Werkstück (3) wird mit dem Positionier- und Spannsystem (5) an einer Arbeitsstelle (25) in einer vorgegebenen und definierten Lage positioniert und gespannt. Es kann dann einem ein- oder mehrstufigen Bearbeitungsprozess unterworfen werden, z.B. einem Fügeprozess. In den Zeichnungen wird ein Fügeprozess in Form eines Schweißprozesses verdeutlicht, der von einer Bearbeitungseinrichtung (4) mit Schweißwerkzeugen durchgeführt wird. Die Bearbeitungseinrichtung (4) weist z.B. einen oder mehrere mehrachsige Industrieroboter (27) auf, die als Fügeroboter, insbesondere Schweißroboter, ausgebildet sind und die ein Fügewerkzeug, insbesondere Schweißwerkzeug, tragen und führen.

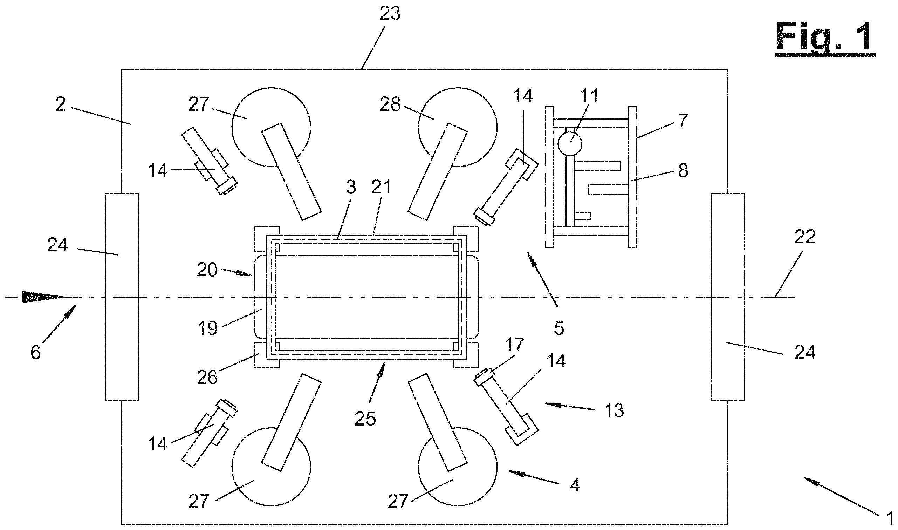

Figur 1 zeigt in einer schematischen Draufsicht eine Fertigungseinrichtung (2) mit einem Positionier- und Spannsystem (5) zum Positionieren und Spannen eines schematisch und gestrichelt dargestellten Werkstücks (3) an einer Arbeitsstelle (25). Die Arbeitsstelle (25) kann einzeln oder mehrfach vorhanden sein und liegt vorzugsweise im Innenbereich der Fertigungseinrichtung (2). Die Fertigungseinrichtung (2) ist z.B. als Fertigungszelle ausgebildet. Sie kann von einer Schutzabtrennung (23), z.B. einem Zaun, umgeben sein.

In einer Fertigungsanlage (1) können mehrere Fertigungseinrichtungen (2) vorhanden sein und durch eine schematisch angedeutete Fördereinrichtung (6) miteinander verbunden werden. Die Fördereinrichtung (6) kann ein verzweigtes Netz von Förderwegen (22) aufweisen, auf denen die Werkstücke (3) transportiert werden. Ein Förderweg (22) kann sich in oder durch die Fertigungseinrichtung (2) und ggf. durch eine oder mehrere Schleusen (24) in der Schutzabtrennung (23) erstrecken.

Das Werkstück (3) wird der Fertigungseinrichtung (2) und der Arbeitsstelle (25) auf einem Lastaufnahmemittel oder Bauteilaufnahmemittel (21) zugeführt. Das Lastaufnahmemittel (21) wird nachfolgend abgekürzt als LAM bezeichnet.

Das LAM (21) ist vorzugsweise rahmenartig ausgebildet und nimmt das Werkstück (3), insbesondere den Teilesatz, mit geeigneten Haltern in einer vorgegebenen Lage auf. Das LAM (21) hat z.B. eine im Wesentlichen rechteckige und flache Form. In Figur 1 ist das LAM (21) schematisch als Rechteckrahmen dargestellt.

Mit dem Positionier- und Spannsystem kann das Werkstück (3) vom LAM (21) entnommen und in einer fertigungsgerechten, insbesondere fügegerechten, sowie stabilen Lage positioniert und gespannt werden. Eventuelle lose Teile des Werkstücks (3) können dabei gegriffen und in eine definierte Relativposition zueinander gebracht sowie für den Fügeprozess gespannt werden. Außerdem können zusätzliche Werkstücke oder Werkstückteile von außen zugeführt und ebenfalls positioniert und gespannt werden.

Das LAM (21) ist auf einem Fördermittel (19) fest oder bevorzugt lösbar angeordnet. Es wird von dem Fördermittel (19) auf einem Förderweg (22) in die Fertigungseinrichtung (2) und zur innen liegenden Arbeitsstelle (25) transportiert. Eine Positioniereinrichtung (26) positioniert das LAM (21) und damit das Werkstück (3) in einer vorgegebenen Position und kann auch für eine Fixierung in dieser Position sorgen.

Das Fördermittel (19) ist vorzugsweise als fahrerloses und automatisch gesteuertes, lenkbares sowie vorzugsweise flurgebundenes Fahrzeug, insbesondere als AGV, ausgebildet. Das Fördermittel (19) bewegt sich auf dem erwähnten Netz von Förderwegen (22). Die Fördereinrichtung (6) weist mehrere Fördermittel (19) auf, welche die Fertigungseinrichtung (2) auch mit anderen Anlagenkomponenten verbinden, z.B. weiteren Fertigungseinrichtungen (2) und/oder einer Bereitstellung für Fördermittel (19) und/oder LAM (21) und/oder Werkstücke (3) oder dgl..

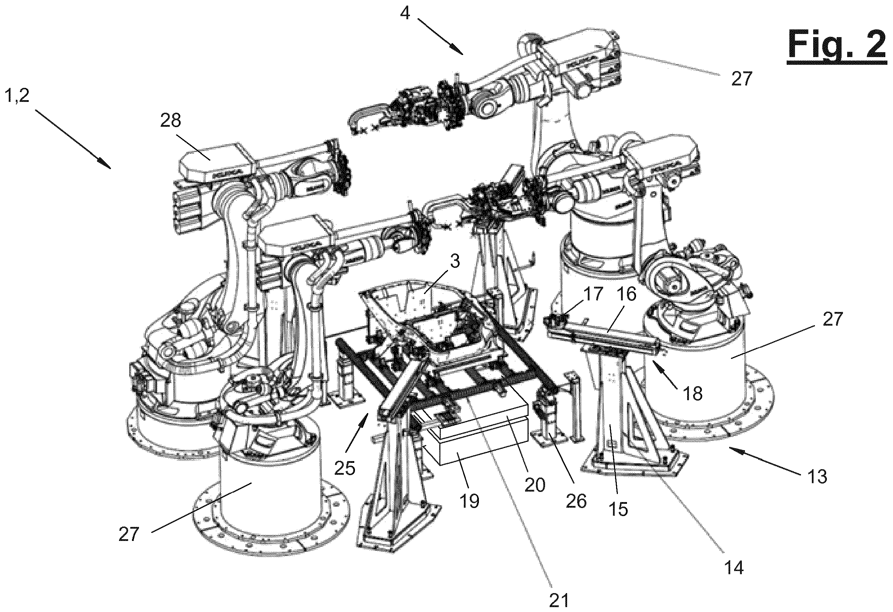

Das Fördermittel (19) weist z.B. ein Chassis mit einem Fahrwerk und mit einer Hubeinrichtung (20) auf, welche das LAM (21) aufnimmt und das LAM (21) heben und senken kann. Mittels einer solchen Hub- oder Senkbewegung kann das LAM (21) an die besagte Positioniereinrichtung (26) übergeben und dort abgestützt und positioniert werden. Hierbei kann das Fördermittel (19) vom LAM (21) gelöst werden und kann die Fertigungseinrichtung (21) anschließend verlassen. Figur 2 zeigt schematisch das Fördermittel (19) mit der Hubeinrichtung (20) und der Positioniereinrichtung (26), die hier z.B. von mehreren aufrechten Stützen an den Eckbereichen der Arbeitsstelle (25) bzw. des LAM (21) gebildet wird.

Das Positionier- und Spannsystem (5) weist ein mobiles und zustellbares Greifwerkzeug (7) und eine verstellbare Stützeinrichtung (13) auf. Das Greifwerkzeug (7) ist z.B. als Geogreifwerkzeug (7) ausgebildet. Es greift das Werkstück (3) und dient zum lagedefinierten Positionieren und Spannen des Werkstücks (3). Das Werkstück (3) wird dabei vorzugsweise vom LAM (21) entnommen. Bei dem besagten Teilesatz können die Bauteile nacheinander vom LAM (21) entnommen und am Geogreifwerkzeug (7) assembliert, bearbeitungsgerecht positioniert und gespannt werden.

Das Geogreifwerkzeug (7) wird auch als Geometrie-Greifwerkzeug bezeichnet. Es hat die Funktion, das Werkstück (3) in einer genauen, vorgegebenen Lage, insbesondere Position und/oder Ausrichtung bzw. Orientierung, zu spannen. Hierbei wird auch ein exakter Lagebezug des Werkstücks (3) zum Geogreifwerkzeug (7) und zu dessen ein oder mehreren Referenzpunkten hergestellt. Bei einem mehrteiligen Werkstück (3), z.B. einem Teilesatz, können beim lagedefinierten Spannen die Werkstückteile oder Bauteile jeweils in eine exakte, definierte gegenseitige Relativlage am Geogreifwerkzeug (7) gebracht werden. Nach der Bearbeitung, insbesondere dem Fügen, hat das mehrteilige Werkstück (3) eine exakte, vorgegebene Geometrie.

Alternativ kann das Greifwerkzeug eine einfachere Ausgestaltung haben, z.B. als Sauggreifer-Anordnung, und kann das Werkstück (3) mit geringerer Lagepräzision greifen. Die nachfolgenden Erläuterungen gelten entsprechend auch für ein solches einfacheres Greifwerkzeug.

Die verstellbare Stützeinrichtung (13) hat die Funktion, das Geogreifwerkzeug (7) an der Arbeitsstelle (25) stationär abzustützen und zu positionieren. Die Stützeinrichtung (13) kann bedarfsweise das Geogreifwerkzeug (7) in dieser Position auch stabilisieren sowie ggf. fixieren. Dadurch wird auch das gespannte Werkstück (3) stationär abgestützt, an der Arbeitsstelle (25) positioniert und ggf. fixiert. Die Stützeinrichtung (13) weist hierfür mehrere Aufnahmen (17) auf, die mit dem Geogreifwerkzeug (7) in einen bevorzugt formschlüssigen Stützeingriff treten. Die drei, vier oder mehr Aufnahmen (17) der Stützeinrichtung (13) sind mit gegenseitigem Abstand in mehreren Richtungen verteilt angeordnet.

Der Stützeingriff am Geogreifwerkzeug (7) erfolgt an mehreren voneinander distanzierten Angriffsstellen. Diese sind bevorzugt an der Peripherie des Geogreifwerkzeug (7) und mit einer den Aufnahmen (17) entsprechenden Verteilung angeordnet. Das Geogreifwerkzeug (7) kann dadurch mechanisch stabil an drei, vier oder mehr räumlich verteilten Punkten bzw. Angriffsstellen abgestützt werden. Eine oder mehrere Angriffsstellen können die vorgenannten Referenzpunkte sein oder zu diesen in einem definierten Lagebezug stehen.

Das Geogreifwerkzeug (7) kann an den Angriffsstellen Positioniermittel (10) aufweisen, welche die vorgegebene Position des abgestützten Geogreifwerkzeug (7) an der Arbeitsstelle (25) definieren und den formschlüssigen Stützeingriff im Zusammenspiel mit der jeweiligen Aufnahme (17) sichern.

Die Aufnahmen (17) können auch eine Fixierfunktion für das aufgenommene Geogreifwerkzeug (7) haben. Sie können hierfür z.B. als steuerbare und angetriebene Spanngreifer, insbesondere als Nullpunktgreifer, ausgebildet sein.

Das Geogreifwerkzeug (7) wird von einem Handlingroboter (28) geführt und zugestellt sowie an die Stützeinrichtung (13) übergeben. Das Geogreifwerkzeug (7) wird dabei vorzugsweise von oben auf die Stützeinrichtung (13) aufgesetzt.

Der Handlingroboter (28) ist in der gezeigten Ausführungsform als mehrachsiger Industrieroboter ausgebildet. Der Handlingroboter ist vorzugsweise als Gelenkarmroboter oder Knickarmroboter ausgeführt und hat vorzugsweise fünf oder mehr Roboterachsen. Dies können rotatorische und/oder translatorische Roboterachsen sein.

Das Geogreifwerkzeug (7) weist einen Anschluss (11) für den Handlingroboter (28) auf. Der Handlingroboter (28) kann eine automatische Wechselkupplung aufweisen, die ein Lösen des Handlingroboters (28) vom Geogreifwerkzeug (7) sowie einen Werkzeugwechsel und ggf. auch eine Medienübertragung ermöglicht. Der Handlingroboter (28) kann während des Bearbeitungsprozesses mit dem abgestützten Geogreifwerkzeug (7) verbunden bleiben. Er kann alternativ das Geogreifwerkzeug (7) an die Stützeinrichtung (13) abgeben und sich dann abkuppeln.

Das Geogreifwerkzeug (7) weist in der gezeigten Ausführungsform ein Tragmittel (8) mit einem oder mehreren Spannmitteln (12) für das Werkstück (3) und dem besagten Anschluss (11) auf. Die Spannmittel (12) können mehrfach vorhanden sein. Sie können formschlüssige und/oder kraftschlüssige, z.B. klemmende, Greifmittel sowie Anschläge, Zentrierdorne oder andere positionsgebende Mittel für das Werkstück (3) aufweisen. Die Spannmittel (12) können z.B. an der Unterseite des Tragmittels (8) hängend angeordnet sein. Der Anschluss (11) kann sich z.B. an der andren Seite, insbesondere Oberseite des Tragmittels (8) befinden.

Das Tragmittel (8) ist z.B. als Tragrahmen ausgebildet, der aus mehreren miteinander verbundenen Tragholmen (9) besteht. Der Tragrahmen kann eine im Wesentlichen rechteckige und flache Form haben. Die bevorzugt rohrförmigen Tragholme (9) haben z.B. eine prismatische Außenkontur und weisen eine Lochung im Mantel auf. Die Tragholme (9) können kreuzweise ausgerichtet sein. Die prismatische Außenkontur und die Lochung erleichtern eine definierte und bevorzugt formschlüssige Verbindung des Tragmittels (8) mit der Stützeinrichtung (13) und deren ein oder mehreren Aufnahmen (17). Die Außenkontur kann alternativ gerundet, insbesondere oval, sein.

Das Tragmittel (8) kann stummelartige Ansätze oder Fortsätze der Tragholme (9) aufweisen, die an mehreren, z.B. vier, Stellen an der Werkzeugperipherie seitlich abstehen und die Angriffsstellen für den formschlüssigen Stützeingriff mit der jeweiligen Aufnahme (17) bilden. An den Angriffsstellen sind die Positioniermittel (10) angeordnet, die z.B. von mehreren Pins gebildet werden, die in die dortige Lochung mit räumlicher Verteilung eingesetzt sind. Die Aufnahmen (17) haben passende Gegenelemente und treten mit den Positioniermitteln (10) in formschlüssigen Eingriff.

Das Positionier- und Spannsystem kann mehrere verschiedene Geogreifwerkzeuge (7) aufweisen. Diese können an unterschiedliche Werkstücke (3) adaptiert sein. Sie können dementsprechend unterschiedliche Formen und Abmessungen haben. Die verstellbare Stützeinrichtung (13) erlaubt eine bevorzugt automatische Anpassung an diese verschiedenen Geogreifwerkzeuge (7).

In der Fertigungseinrichtung (2) kann ein Magazin (nicht dargestellt) für mehrere und verschiedene Geogreifwerkzeuge (7) vorhanden sein. Der Handlingroboter (28) kann bei einem Werkstückwechsel das Geogreifwerkzeug (7) tauschen. Die Geogreifwerkzeuge (7) können mit einem adaptierten LAM zugeführt und abgeführt werden.

Die Stützeinrichtung (13) kann in beliebig geeigneter Weise ausgebildet sein. Im gezeigten Ausführungsbeispiel wird sie von vier Stützmitteln (14) gebildet, die mit gegenseitigem Abstand und z.B. im Viereck verteilt an der Arbeitsstelle (25) angeordnet sind. Die Stützmittel (14) sind z.B. an den Eckbereichen der Arbeitsstelle (25) bzw. des hier positionierten LAM (21) angeordnet. Sie befinden sich mit Abstand außerhalb der Arbeitsstelle (25) und der Positioniereinrichtung (26). Sie können erfindungsgemäß bedarfsweise zwischen einer zurückgezogenen Ruhestellung und einer Betriebsstellung in der Nähe des LAM (21) bewegt werden. In Abwandlung der gezeigten Ausführungsform können die Zahl und Anordnung der Stützmittel (14) variieren. Figur 1 zeigt in der linken Bildhälfte die zurückgezogene Ruhestellung und in der rechten Bildhälfte die ausgefahrene Betriebsstellung.

Die Stützmittel (14) sind jeweils mit einer Aufnahme (17) für das Geogreifwerkzeug (7) ausgerüstet. Die Aufnahme (17) kann mittels einer Stelleinrichtung (18) in einer oder mehreren Stellachsen verstellt werden.

Die Aufnahmen (17) können jeweils in der vorbeschriebenen Weise zur Aufnahme des Geogreifwerkzeugs (7), insbesondere eines Tragholms (9), ausgebildet sein. Die Aufnahmen (17) können jeweils wahlweise starr oder beweglich, insbesondere als Spanngreifer, ausgeführt sein. Ihre aufnehmende Formgebung kann an die Außenkontur, insbesondere an den prismatischen Mantel, eines Tragholms (9) angepasst sein.

In einer anderen einfachen Form können z.B. die Aufnahmen (17) jeweils als wannenförmige Auflage für einen Tragholm (9) oder ein anderes Teil des Geogreifwerkzeugs (7) ausgebildet sein. Sie können dabei z.B. mit einem Dorn oder dergleichen in die Lochung zu Positionier- und Arretierzwecken greifen.

In der gezeigten Ausführungsform sind die Stützmittel (14) jeweils stationär und auf dem Boden stehend angeordnet. Sie sind z.B. galgenförmig und gleichartig ausgebildet. Sie weisen jeweils einen aufrechten, bodenfesten Ständer (15) mit einem am oberen Ständerende quer abstehenden, liegenden Ausleger (16) auf. Dieser fungiert als Tragarm für die endseitig und bevorzugt an der Oberseite des Auslegers (16) angeordnete Aufnahme (17) .

Die Ständer (15) sind in der gezeigten Ausführungsform mit seitlichem Abstand von der Arbeitsstelle (25) und an deren Eckbereichen angeordnet. Der vorspringende Ausleger (16) ist jeweils schräg, insbesondere diagonal, zur Arbeitsstelle (25) und zum dortigen LAM (21) ausgerichtet. Die Stützmittel (14) sind an den besagten Eckbereichen angeordnet und stören nicht die an den Längsseiten der Arbeitsstelle (25) bzw. des durchgehenden Fahrwegs (22) angeordneten Füge- und Handlingroboter (27,28).

Die Ausleger (16) sind jeweils in einer solchen, vorzugsweise gleichen, Höhe über dem Boden angeordnet, dass in Betriebsstellung das abgestützte Geogreifwerkzeug (7) und das z.B. daran hängende Werkstück (3) einen ausreichenden Freiraum nach unten für die Bearbeitungsprozesse haben. Der z.B. starre Ständer (15) kann hierfür eine geeignete Länge haben. Der Geogreifwerkzeug (7) kann in dieser Abstützlage mit seiner Hauptebene eine liegende, insbesondere horizontale Stellung einnehmen.

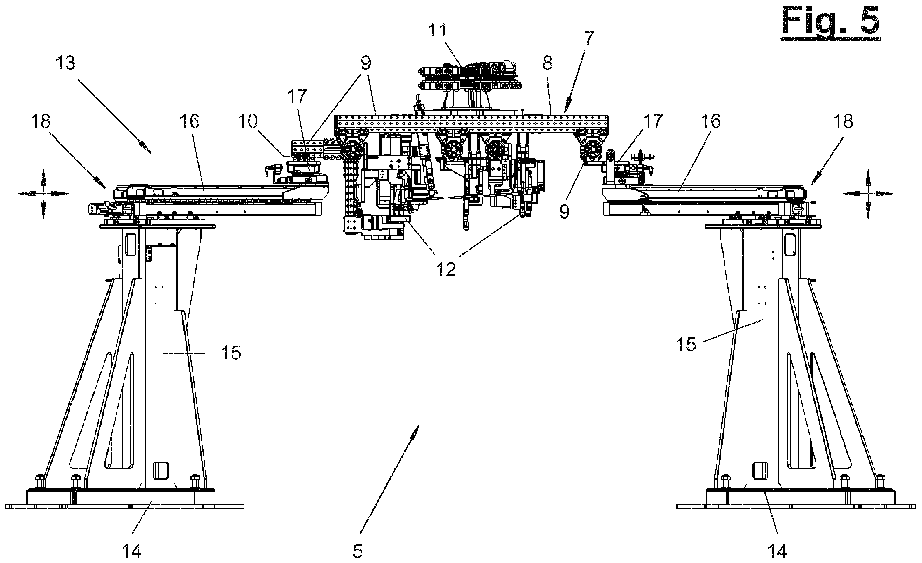

Außerdem ist eine einachsige oder mehrachsige Stelleinrichtung (18) für den jeweiligen Ausleger (16) vorhanden. Die Stelleinrichtung (18) kann den bevorzugt geraden Ausleger (16) in einer oder mehreren Stellachsen relativ zum Ständer (15) gemäß der Pfeile in Figur 5 bewegen.

Der jeweilige Ausleger (16) kann mit der Stelleinrichtung (18) in einer translatorischen, vorzugsweise linearen, Stellachse entlang seiner Längserstreckung relativ zum Ständer (15) zwischen der Ruhe- und Betriebsstellung verfahren werden. Die Bewegungsrichtung ist horizontal ausgerichtet. Sie ist außerdem schräg, insbesondere diagonal, zur Arbeitsstelle (25) gerichtet.

Der jeweilige Ausleger (16) kann ferner mit der Stelleinrichtung (18) in einer weiteren translatorischen, vorzugsweise linearen, und aufrechten, insbesondere vertikalen, Stellachse relativ zum Ständer (15) in der Höhe verfahren werden. Die verschiedenen Ausleger (16) können dabei gleich und unterschiedlich weit gehoben und/oder gesenkt werden. Bei ungleicher Höhe kann eine entsprechende Schrägstellung des Geogreifwerkzeugs (7) erreicht werden. Die Aufnahmen (17) können zur Vermeidung von Zwängungen entsprechende Freiheitsgrade haben.

Die Endposition der Aufnahme (17) im Raum bei Einnahme der Betriebs- und Abstützstellung kann durch die Form und Abmessung des jeweiligen Geogreifwerkzeugs (7) bestimmt sein.

In einer Abwandlung der gezeigten Ausführungsbeispiele können die Stützmittel (14) in sich starr ausgebildet sein, wobei die ein- oder mehrachsige Stelleinrichtung (18) zwischen dem Stützmittel (14) und dem Untergrund angeordnet ist. In einer weiteren Variante sind andere Kinematiken, insbesondere Schwenkbewegungen, von Ausleger (16) und/oder Ständer (15) möglich.

Die Stelleinrichtung (18) kann eine oder mehrere der besagten Stellachsen aufweisen. Die Stellachsen können jeweils als translatorische oder rotatorische Stellachsen ausgeführt sein. In der gezeigten Ausführungsform mit der linearen Verstellung des Auslegers (16) weist die Stelleinrichtung (18) z.B. eine Linearführung mit einem Kugelgewindetrieb auf.

Die Aufnahmen (17) können außerdem eine oder mehrere eigene Stellachsen aufweisen. Sie können z.B. auf einem Kreuzschlitten linear in zwei bevorzugt horizontale Richtungen verfahren werden. Ferner kann die Aufnahme (17) eine Drehbewegung zur aufnahmegerechten Ausrichtung gegenüber dem Geogreifwerkzeug (7), insbesondere einem Tragholm (9), ausführen.

Das Positionier- und Spannsystem (5) kann in der vorerwähnten Weise mehrere verschiedene und an unterschiedliche Werkstücke (3) adaptierte Geogreifwerkzeuge (7) aufweisen. Die Stützeinrichtung (13) kann zur Anpassung an die verschiedenen Geogreifwerkzeuge (7) mittels der ein oder mehreren Stelleinrichtungen (18) verstellbar sein. Vorzugsweise ist eine automatische Verstellbarkeit vorhanden.

Das Positionier- und Spannsystem (5) kann eine Steuerung (nicht dargestellt) aufweisen. Die Steuerung kann insbesondere die Stützeinrichtung (13) und deren ein oder mehrere Stelleinrichtungen (18) beaufschlagen. Die Steuerung kann eigenständig ausgebildet und angeordnet sein. Alternativ kann sie in eine vorhandene andere Steuerung, z.B. in eine Robotersteuerung des Handlingroboters (28), integriert sein. Die ein oder mehreren Stellantriebe (18) können z.B. als Zusatzachse des Handlingroboters angesteuert werden.

Der Betrieb der Fertigungseinrichtung (2) und des Positionier- und Spannsystems (5) kann z.B. in folgender Weise ablaufen:
Ein Fördermittel (9) mit einem LAM (21) und einem Werkstück (3) fährt auf dem Förderweg (22) durch die eine Schleuse (24) in die Fertigungseinrichtung (2) und stoppt an der dortigen Arbeitsstelle (25). Das LAM (21) wird ggf. durch die Hubeinrichtung (20) oder auf andere Weise an der Positioniereinrichtung (26) aufgenommen und positioniert. Das Fördermittel (19) kann an der Arbeitsstelle (25) verbleiben oder die Fertigungseinrichtung (2) über die andere Schleuse (24) verlassen.

Der Handlingroboter (28) greift mit seiner Wechselkupplung das für das jeweilige Werkstück (3) passende und benötigte Geogreifwerkzeug (7)und nimmt damit das Werkstück (3), insbesondere ein oder mehrere Bauteile eines Teilesatzes, vom LAM (21) auf. Die Stützeinrichtung (13) ist inaktiv bzw. befindet sich in der zurückgezogenen Ruhestellung, so dass der freie Zugang des Handlingroboters (28) und auch der Bearbeitungseinrichtung (4) zur Arbeitsstelle (25) gewährleistet ist.

Mit dem robotergeführten Geogreifwerkzeug (7) können Teile bzw. Bauteile des Werkstücks (3) einzeln oder in Gruppen gleichzeitig oder nacheinander gegriffen und dabei assembliert sowie in der bearbeitungsgerechten Stellung am Geogreifwerkzeug (7) positioniert und gespannt werden.

Anschließend nimmt die Stützeinrichtung (13) die Betriebsstellung ein, wobei der Handlingroboter (28) das Geogreifwerkzeug (7) mit dem gespannten Werkstück (3) auf den Aufnahmen (17) in der vorbeschriebenen Weise aufsetzt, abstützt und positioniert. Anschließend kann die Bearbeitungseinrichtung (4) ein oder mehrere Bearbeitungsprozesse vornehmen, wobei z.B. die Fügeroboter (27) das gespannte Werkstück (3) fügen, insbesondere schweißen.

Am Ende der Bearbeitung löst der Handlingroboter (28) das Geogreifwerkzeug (7) von der Stützeinrichtung (13), die daraufhin in die Ruhestellung zurückkehrt und den Zugang zum LAM (21) freigibt.

Der Handlingroboter (28) setzt das bearbeitete Werkstück (3) in einer ersten Variante auf dem ursprünglichen LAM (21) ab, woraufhin dieses vom Fördermittel (19) wieder übernommen und anschließend aus der Fertigungseinrichtung (2) abtransportiert wird. In einer anderen Variante kann das LAM (21) nach Abnahme des Werkstücks (3) durch den Handlingroboter (28) und das Geogreifwerkzeug (7) aus der Fertigungseinrichtung (2) entfernt werden, wobei anschließend ein anderes und für das bearbeitete Werkstück (3) besser geeignetes LAM von einem anderen Fördermittel (19) zur Arbeitsstelle (25) gebracht und hier für die Übernahme des bearbeiteten Werkstücks (3) positioniert wird.

Außerdem sind Zwischenschritte oder Zwischenprozesse möglich. Einzelne Teile oder Bauteile des Werkstücks (3) können von einem anderen Handlingroboter mit einem anderen Geogreifer aufgenommen, schwebend gehalten und den Fügerobotern (27) für einen ersten Fügeprozess präsentiert sowie anschließend wieder auf dem LAM (21) abgelegt werden. Hierdurch kann eine vorgefügte Baugruppe innerhalb des Werkstücks (3) gebildet werden. Diese kann anschließend zusammen mit den anderen Teilen oder Bauteilen des Werkstücks (3) vom robotergeführten Geogreifwerkzeug (7) in der vorbeschriebenen Weise gegriffen, gespannt und auf der Stützeinrichtung (13) abgestützt werden.

Ferner können weitere Werkstücke der Arbeitsstelle (25) zugeführt werden. Hierfür kann z.B. der Handlingroboter (28) mit dem Geogreifwerkzeug (7) ein erstes Werkstück (3) von einem ersten LAM (21) greifen sowie spannen und anschließend von einem zweiten LAM (21) ein zweites Werkstück greifen und spannen. An der Arbeitsstelle (25) kann hierfür ein zwischenzeitlicher LAM-Wechsel durchgeführt werden. In weiterer Abwandlung können andere Werkstücke oder Bauteile auch von einem separaten Förderer in die Fertigungseinrichtung (2) gebracht werden.

Über das Fördermittel (19) und ein LAM kann auch ein Wechsel von werkstückspezifischen Werkzeugen, insbesondere von Geogreifwerkzeugen (7) der vorbeschriebenen Art erfolgen. Ein Magazin für Geogreifwerkzeuge (7) kann z.B. in einem solchen Fall entbehrlich sein.

Die Fertigungsanlage (1) kann mehrere der genannten Fertigungseinrichtungen (2) beinhalten. Über die Fördereinrichtung (6) und die Fördermittel (19) sowie die LAM (21) können die Werkstücke (3) in einem Fertigungsfluss zwischen den Fertigungsstationen (2) auf dem Förderwegenetz weiter transportiert und in einem Loop zu einer Bereitstellung (nicht dargestellt) von Werkstücken (3) und/oder LAM (21) transportiert werden. Hier können fertig bearbeitete Werkstücke (3) abgeladen und neue, zu bearbeitende Werkstücke (3) auf die LAM (21) geladen werden.

Die Fertigungseinrichtungen (2) können in der Fertigungsanlage (1) in einer vorzugsweise gleichmäßigen Matrix mit einem umgebenden Förderwegenetz angeordnet sein. Die Fertigungseinrichtungen (2) können untereinander gleichartig ausgebildet sein, wobei ihre Anpassung an die jeweiligen Bearbeitungsprozesse werkstückspezifisch erfolgen kann. Innerhalb der Fertigungsanlage (1) kann hierfür eine Tryout-Station oder eine Pilotstation für eine Fertigungseinrichtung (2) vorhanden sein, in der bei einem Werkstückwechsel eine Adaption der Steuerung der Fertigungseinrichtung (2) bzw. ihrer Komponenten, insbesondere auch der Bearbeitungseinrichtung (4) und des Positionier- und Spannsystems (5), vorgenommen wird. Den verschiedenen Fertigungseinrichtungen (2) kann dann ein entsprechender Daten- und Steuersatz zusammen mit werkstückspezifischen Werkzeugen übermittelt werden. Eine Umrüstung der Fertigungsanlage (1) ist dabei im laufenden Betrieb ohne signifikante Unterbrechungen möglich.

Abwandlungen der gezeigten und beschriebenen Ausführungsformen sind in verschiedener Weise möglich. Die Merkmale der verschiedenen Ausführungsbeispiele und genannten Varianten können beliebig miteinander kombiniert und ggf. auch ausgetauscht werden.

Eine Fertigungseinrichtung (2) kann eine Mehrfachanordnung von Arbeitsstellen (25) und ggf. auch mehrere Positionier- und Spannsysteme (5) aufweisen. Die Stützeinrichtung (13) kann eine andere Zahl und Anordnung von Stützmitteln aufweisen. Statt der gezeigten flurgebundenen Anordnung der Stützmittel (14) kann eine andere, insbesondere hängende Anordnung vorhanden sein. Statt mehrerer einzelner Stützmittel (14) kann die Stützeinrichtung eine Verbundkonstruktion aufweisen. Die ein oder mehrere Stützmittel (14) können eine andere Geometrie und Kinematik haben. In weiterer Abwandlung der verschiedenen Ausgestaltungen können an einem Stützmittel (14) mehrere Aufnahmen (17) starr oder auch zumindest teilweise beweglich angeordnet sein. Die verschiedenen Greifwerkzeuge, insbesondere Geogreifwerkzeuge (7), können hierfür eine entsprechend adaptierte Ausbildung haben. Statt des Handlingroboters (28) kann eine andere mehrachsige Handhabungsvorrichtung für das Greifwerkzeug, insbesondere Geogreifwerkzeug (7), zum Einsatz kommen.

### BEZUGSZEICHENLISTE

- 1: Fertigungsanlage
- 2: Fertigungseinrichtung, Fertigungszelle
- 3: Werkstück
- 4: Bearbeitungseinrichtung
- 5: Positionier- und Spannsystem
- 6: Fördereinrichtung
- 7: Greifwerkzeug, Geogreifwerkzeug
- 8: Tragmittel, Tragrahmen
- 9: Tragholm
- 10: Positioniermittel
- 11: Anschluss
- 12: Spannmittel
- 13: Stützeinrichtung
- 14: Stützmittel
- 15: Ständer
- 16: Ausleger
- 17: Aufnahme
- 18: Stelleinrichtung
- 19: Fördermittel, AGV
- 20: Hubeinrichtung
- 21: Lastaufnahmemittel LAM
- 22: Förderweg
- 23: Schutzabtrennung
- 24: Schleuse
- 25: Arbeitsstelle, Bearbeitungsbereich
- 26: Positioniereinrichtung
- 27: Fügeroboter
- 28: Handlingroboter

## Patentansprüche

1. Positionier- und Spannsystem für ein zu bearbeitendes Werkstück (3), das an einer Arbeitsstelle (25) auf einem mobilen Lastaufnahmemittel (21) angeordnet ist, wobei das Positionier- und Spannsystem (5) ein mobiles und robotergeführtes Greifwerkzeug (7) für das Werkstück (3), insbesondere ein Geogreifwerkzeug zum lagedefinierten Spannen des Werkstücks (3), aufweist, wobei das Positionier- und Spannsystem (5) eine Stützeinrichtung (13) aufweist, welche das Greifwerkzeug (7), insbesondere Geogreifwerkzeug (7) mit dem gegriffenen, insbesondere gespannten, Werkstück (3) für dessen Bearbeitung an der Arbeitsstelle (25) stationär abstützt, stabilisiert und positioniert, wobei die Stützeinrichtung (13) stationär an der Arbeitsstelle (25) angeordnet ist, **dadurch gekennzeichnet, dass** die Stützeinrichtung (13) zwischen einer Betriebsstellung an der Arbeitsstelle (25) und einer zurückgezogenen Ruhestellung verstellbar ist.

2. Positionier- und Spannsystem nach Anspruch 1,
**dadurch gekennzeichnet, dass** das Positionier- und Spannsystem (5) mehrere verschiedene und an unterschiedliche Werkstücke (3) adaptierte Greifwerkzeuge (7), insbesondere Geogreifwerkzeuge, aufweist, wobei die Stützeinrichtung (13) zur Anpassung an die verschiedenen Greifwerkzeuge (7) verstellbar ist.

3. Positionier- und Spannsystem nach Anspruch 1 oder 2, **dadurch gekennzeichnet, dass** die Stützeinrichtung (13) mehrere Aufnahmen (17), insbesondere in der Ausbildung steuerbare Spanngreifer, aufweist, die mit dem Greifwerkzeug (7) an mehreren voneinander distanzierten Angriffsstellen in einen formschlüssigen Stützeingriff treten.

4. Positionier- und Spannsystem nach einem der vorhergehenden Ansprüche, **dadurch**
**gekennzeichnet, dass** das Greifwerkzeug (7) ein Tragmittel (8), insbesondere ausgebildet als flacher Tragrahmen mit mehreren verbundenen Tragholmen (9), mit Spannmitteln (12) für das Werkstück (3) und mit einem Anschluss (11) für einen Handlingroboter (28) sowie mit Positioniermitteln (10) für einen formschlüssigen Stützeingriff aufweist.

5. Positionier- und Spannsystem nach einem der vorhergehenden Ansprüche, **dadurch**
**gekennzeichnet, dass** die Stützeinrichtung (13) mehrere mit gegenseitigem Abstand und flächig verteilt angeordnete Stützmittel (14) mit jeweils einer Aufnahme (17) und jeweils einer einachsigen oder mehrachsigen Stelleinrichtung (18) aufweist.

6. Positionier- und Spannsystem nach Anspruch 5,
**dadurch gekennzeichnet, dass** die Stützeinrichtung (13) vier im Viereck verteilte und mit seitlichem Abstand zur Arbeitsstelle (25) angeordnete Stützmittel (14) aufweist und/oder die Stützmittel (14) jeweils einen aufrechten Ständer (15) mit einem verstellbaren, seitlich abstehenden Ausleger (16) und einer Aufnahme (17) am Auslegerende aufweisen.

7. Positionier- und Spannsystem nach einem der vorhergehenden Ansprüche, **dadurch**
**gekennzeichnet, dass** das Positionier- und Spannsystem (5) eine Steuerung aufweist und automatisch verstellbar ist.

8. Fertigungseinrichtung für zu bearbeitende Werkstücke (3) die an einer Arbeitsstelle (25) auf einem mobilen Lastaufnahmemittel (21) angeordnet ist,
**dadurch gekennzeichnet, dass** die Fertigungseinrichtung (2) ein Positionier- und Spannsystem (5) nach mindestens einem der Ansprüche 1 bis 7 aufweist.

9. Fertigungseinrichtung nach Anspruch 8, **dadurch**
**gekennzeichnet, dass** die Fertigungseinrichtung (2) eine Bearbeitungseinrichtung (4) für das Werkstück (3) und einen Handlingroboter (28) für das Greifwerkzeug (7), insbesondere Georgreifwerkzeug, aufweist, die jeweils mindestens einen mehrachsigen Industrieroboter aufweisen.

10. Fertigungseinrichtung nach Anspruch 8 oder 9,
**dadurch gekennzeichnet, dass** die Fertigungseinrichtung (2) an der Arbeitsstelle (25) eine Positioniereinrichtung (26) für das Lastaufnahmemittel (21) und/oder für ein das Lastaufnahmemittel (21) transportierendes Fördermittel (19) aufweist.

11. Fertigungsverfahren für ein zu bearbeitendes Werkstück (3), das auf einem mobilen Lastaufnahmemittel (21) einer Arbeitsstelle (25) in einer Fertigungseinrichtung (2) zugeführt wird, wobei das Werkstück (3) mit einem mobilen und robotergeführten Greifwerkzeug (7) gegriffen, insbesondere mit einem Geogreifwerkzeug lagedefiniert gespannt wird, wobei das Greifwerkzeug (7), insbesondere Geogreifwerkzeug (7), mit dem gegriffenen, insbesondere gespannten, Werkstück (3) für dessen Bearbeitung an der Arbeitsstelle (25) von einer Stützeinrichtung (13) eines Positionier- und Spannsystems (5) stationär abgestützt, stabilisiert und positioniert wird, wobei die Stützeinrichtung (13) stationär an der Arbeitsstelle (25) angeordnet ist, **dadurch gekennzeichnet, dass** die Stützeinrichtung (13) zwischen einer Betriebsstellung an der Arbeitsstelle (25) und einer zurückgezogenen Ruhestellung verstellt wird.

12. Fertigungsverfahren nach Anspruch 11, **dadurch**
**gekennzeichnet, dass** das Werkstück (3) mit dem Greifwerkzeug (7), insbesondere Geogreifwerkzeug (7), vom Lastaufnahmemittel (21) entnommen und gespannt wird.

13. Fertigungsverfahren nach Anspruch 11 oder 12,
**dadurch gekennzeichnet, dass** das Greifwerkzeug (7) in Betriebsstellung von oben auf der Stützeinrichtung (13) aufgesetzt und fixiert wird.

14. Fertigungsverfahren nach einem der Ansprüche 11 bis 13, **dadurch gekennzeichnet, dass** für unterschiedliche Werkstücke (3) verschiedene, adaptierte Greifwerkzeuge (7), insbesondere Geogreifwerkzeug, benutzt werden, wobei die Stützeinrichtung (13) zur Anpassung an die verschiedenen Greifwerkzeuge (7) ein- oder mehrachsig sowie automatisch gesteuert verstellt wird.

## Claims

1. Positioning and clamping system for a workpiece (3) to be machined, which is arranged at a working point (25) on a mobile load-bearing means (21), the positioning and clamping system (5) having a mobile and robot-guided gripping tool (7) for the workpiece (3), in particular a geogripping tool for the position-defined clamping of the workpiece (3),
**characterized in that** the positioning and clamping system (5) has an adjustable supporting device (13), which supports, stabilises and positions the gripping tool (7), in particular geogripping tool (7) with the gripped, in particular clamped, workpiece (3) in a stationary manner at the working point (25) for the machining thereof, the supporting device (13) being arranged in a stationary manner at the working point (25) and being adjustable between an operating position at the working point (25) and a retracted rest position.

2. Positioning and clamping system according to claim 1, **characterised in that** the positioning and clamping system (5) has several different gripping tools (7), in particular geo-gripping tools, adapted to different workpieces (3), the supporting device (13) being adjustable for adaptation to the different gripping tools (7).

3. Positioning and clamping system according to claim 1 or 2, **characterised in that** the supporting device (13) has a plurality of receptacles (17), in particular controllable clamping grippers in the form, which enter into positive supporting engagement with the gripping tool (7) at a plurality of spaced-apart engagement points.

4. Positioning and clamping system according to one of the preceding claims, **characterised in that** the gripping tool (7) has a support means (8), in particular designed as a flat support frame with a plurality of connected support spars (9), with clamping means (12) for the workpiece (3) and with a connection (11) for a handling robot (28) as well as with positioning means (10) for a positive support engagement.

5. Positioning and clamping system according to one of the preceding claims, **characterised in that** the supporting device (13) has a plurality of supporting means (14) arranged at a distance from one another and distributed over a surface, each having a receptacle (17) and a respective single-axis or multi-axis adjusting device (18).

6. Positioning and clamping system according to claim 5, **characterised in that** the supporting device (13) has four supporting means (14) distributed in a quadrilateral and arranged at a lateral distance from the working point (25) and/or the supporting means (14) each have an upright stand (15) with an adjustable, laterally projecting jib (16) and a receptacle (17) at the jib end.

7. Positioning and clamping system according to one of the preceding claims, **characterised in that** the positioning and clamping system (5) has a control and is automatically adjustable.

8. Manufacturing device for workpieces (3) to be machined, which is arranged at a working point (25) on a mobile load-bearing means (21), **characterised in that** the manufacturing device (2) has a positioning and clamping system (5) according to at least one of claims 1 to 7.

9. Manufacturing device according to claim 8,
**characterised in that** the manufacturing device (2) has a machining device (4) for the workpiece (3) and a handling robot (28) for the gripping tool (7), in particular a Georg gripping tool, which each have at least one multi-axis industrial robot.

10. Manufacturing device according to claim 8 or 9,
**characterised in that** the manufacturing device (2) has at the working point (25) a positioning device (26) for the load-bearing means (21) and/or for a conveyor means (19) transporting the load-bearing means (21).

11. Manufacturing method for a workpiece (3) to be machined, which is supplied on a mobile load-bearing means (21) to a working point (25) in a manufacturing device (2), wherein the workpiece (3) is gripped with a mobile and robot-guided gripping tool (7), in particular is clamped in a position-defined manner with a geo-gripping tool,
**characterised in that** the gripping tool (7), in particular geo-gripping tool (7), is supported in a stationary manner with the gripped workpiece (3), in particular clamped, for the machining thereof at the working point (25) by an adjustable supporting device (13) of a positioning and clamping system (5), in particular clamped, workpiece (3) is supported, stabilised and positioned in a stationary manner at the working point (25) by an adjustable supporting device (13) of a positioning and clamping system (5) for the processing thereof, the supporting device (13) being arranged in a stationary manner at the working point (25) and being adjusted between an operating position at the working point (25) and a retracted rest position.

12. Manufacturing method according to claim 11,
**characterised in that** the workpiece (3) is removed from the load-bearing means (21) and clamped by the gripping tool (7), in particular geo-gripping tool (7) .

13. Manufacturing method according to claim 11 or 12,
**characterised in that** the gripping tool (7) is placed and fixed on the supporting device (13) from above in the operating position.

14. Manufacturing method according to one of the claims 11 to 13, **characterised in that** different, adapted gripping tools (7), in particular geo-gripping tools, are used for different workpieces (3), wherein the supporting device (13) is adjusted in one or more axes and in an automatically controlled manner in order to adapt to the different gripping tools (7).

## Revendications

1. Système de positionnement et de serrage pour une pièce à usiner (3) qui est disposée sur un point de travail (25) sur un moyen de support de charge mobile (21), le système de positionnement et de serrage (5) présentant un outil de préhension (7) mobile et guidé par robot pour la pièce à usiner (3), en particulier un outil de géogrippage pour le serrage défini en position de la pièce à usiner (3), **caractérisé en ce que** le système de positionnement et de serrage (5) présente un dispositif de support (13) réglable. qui soutient, stabilise et positionne l'outil de préhension (7), en particulier l'outil de géogrippage (7) avec la pièce à usiner (3) saisie, en particulier serrée, de manière stationnaire sur le point de travail (25) pour son traitement, le dispositif de soutien (13) étant disposé de manière stationnaire sur le point de travail (25) et pouvant être réglé entre une position de travail sur le point de travail (25) et une position de repos rétractée.

2. Système de positionnement et de serrage selon la revendication 1, **caractérisé en ce que** le système de positionnement et de serrage (5) présente une pluralité d'outils de préhension différents (7) adaptés à différentes pièces à usiner (3), en particulier des outils de géo-pincement, le dispositif de support (13) étant réglable pour s'adapter aux différents outils de préhension (7).

3. Système de positionnement et de serrage selon la revendication 1 ou 2, **caractérisé en ce que** le dispositif d'appui (13) présente une pluralité de réceptacles (17), en particulier des pinces de serrage commandables en forme, qui entrent en prise d'appui par complémentarité de forme avec l'outil de préhension (7) en une pluralité de points de prise espacés les uns des autres.

4. Système de positionnement et de serrage selon l'une des revendications précédentes, **caractérisé en ce que** l'outil de préhension (7) présente un moyen de support (8), en particulier conçu comme un cadre de support plat avec une pluralité de longerons de support (9) reliés entre eux, avec des moyens de serrage (12) pour la pièce à usiner (3) et avec un raccordement (11) pour un robot de manipulation (28), et avec des moyens de positionnement (10) pour un engagement de support positif.

5. Système de positionnement et de serrage selon l'une des revendications précédentes, **caractérisé en ce que** le dispositif de support (13) présente une pluralité de moyens de support (14) disposés à distance mutuelle et répartis sur une surface, qui présentent chacun un réceptacles (17) et un dispositif de réglage (18) à un ou plusieurs axes.

6. Système de positionnement et de serrage selon la revendication 5, **caractérisé en ce que** le dispositif de support (13) présente quatre moyens de support (14) répartis dans un quadrilatère et disposés à une distance latérale du point de travail (25) et/ou les moyens de support (14) présentent chacun un montant vertical (15) avec une flèche (16) réglable, faisant saillie latéralement, et un réceptacle (17) à l'extrémité de la flèche.

7. Système de positionnement et de serrage selon l'une quelconque des revendications précédentes, **caractérisé en ce que** le système de positionnement et de serrage (5) comprend une commande et est réglable automatiquement.

8. Dispositif de fabrication de pièces à usiner (3), qui est disposé à un point de travail (25) sur un moyen de support de charge mobile (21), **caractérisé en ce que** le dispositif de fabrication (2) présente un système de positionnement et de serrage (5) selon au moins une des revendications 1 à 7.

9. Dispositif de fabrication selon la revendication 8, **caractérisé en ce que** le dispositif de fabrication (2) présente un dispositif d'usinage (4) pour la pièce à usiner (3) et un robot de manipulation (28) pour l'outil de préhension (7), notamment l'outil de préhension Georg, qui présentent chacun au moins un robot industriel multi-axes.

10. Dispositif de fabrication selon la revendication 8 ou 9, **caractérisé en ce que** le dispositif de fabrication (2) comporte, au niveau du point de travail (25), un dispositif de positionnement (26) pour le moyen support de charge (21) et/ou pour un moyen de transport (19) transportant le moyen support de charge (21).

11. Procédé de fabrication d'une pièce à usiner (3), qui est amenée sur un support de charge mobile (21) à un point de travail (25) dans un dispositif de fabrication (2), la pièce à usiner (3) étant saisie avec un outil de préhension (7) mobile et guidé par robot, en particulier serrée de manière définie en position avec un outil de géo-pincement, **caractérisé en ce que** l'outil de préhension (7), en particulier l'outil de géo-pincement (7), est soutenu, stabilisé et positionné de manière stationnaire avec la pièce à usiner (3) saisie pour son usinage au point de travail (25) par un dispositif de support réglable (13) d'un système de positionnement et de serrage (5), en particulier serrée, la pièce à usiner (3) est soutenue, stabilisée et positionnée de manière stationnaire au niveau du point de travail (25) par un dispositif de support réglable (13) d'un système de positionnement et de serrage (5) pour son traitement, le dispositif de support (13) étant disposé de manière stationnaire au niveau du point de travail (25) et étant réglable entre une position de travail au niveau du point de travail (25) et une position de repos rétractée.

12. Procédé de fabrication selon la revendication 11, **caractérisé en ce que** la pièce à usiner (3) est retirée du moyen de support de charge (21) et serrée par l'outil de préhension (7), en particulier l'outil de géo-pincement (7).

13. Procédé de fabrication selon la revendication 11 ou 12, **caractérisé en ce que** l'outil de préhension (7) est placé et fixé sur le dispositif de support (13) par le haut en position de fonctionnement.

14. Procédé de fabrication selon l'une des revendications 11 à 13, **caractérisé en ce que** des outils de préhension (7) différents et adaptés, notamment des outils de géo-pincement, sont utilisés pour des pièces à usiner différentes (3), le dispositif de support (13) étant réglé de manière monoaxiale ou multiaxiale et de manière automatique pour s'adapter aux différents outils de préhension (7) .
